Europäisches Patentamt

European Patent Office

Office européen des brevets

(19)

(11) Veröffentlichungsnummer: **0 102 473**
**B1**

(12) **EUROPÄISCHE PATENTSCHRIFT**

(45) Veröffentlichungstag der Patentschrift:
**10.12.86**

(21) Anmeldenummer: **83106469.6**

(22) Anmeldetag: **02.07.83**

(51) Int. Cl.⁴: **B 01 D 53/34, F 23 J 15/00**

(54) **Einrichtung und Verfahren zur trockenen Rauchgasreinigung.**

(30) Priorität: **23.07.82 DE 3227553**

(43) Veröffentlichungstag der Anmeldung:
**14.03.84 Patentblatt 84/11**

(45) Bekanntmachung des Hinweises auf die Patenterteilung:
**10.12.86 Patentblatt 86/50**

(84) Benannte Vertragsstaaten:
**AT BE CH DE FR GB IT LI LU NL SE**

(56) Entgegenhaltungen:
**DE - A - 3 009 366**
**US - A - 3 780 498**
**US - A - 3 883 326**
**US - A - 4 236 464**

(73) Patentinhaber: **Thyssen Industrie AG, Am Thyssenhaus 1, D-4300 Essen 1 (DE)**

(72) Erfinder: **Remmers, Karl, Tübinger Strasse 25, D-4000 Düsseldorf-Urdenbach (DE)**

(74) Vertreter: **Eberhard, Friedrich, Dr., Am Thyssenhaus 1, D-4300 Essen 1 (DE)**

EP 0 102 473 B1

**Beschreibung**

Die Erfindung bezieht sich auf eine Einrichtung zur trockenen Reinigung von mit gasförmigen Schadstoffen, insbesondere Schwefelverbindungen, verunreinigten Rauchgasen aus der Verbrennung fossiler Brennstoffe, vornehmlich in Kesselanlagen und Öfen, mit einem im Rauchgaskanal (18) angeordneten, das Rauchgas abkühlenden Abschnitt (13) eines regenerativen Wärmetauschers (8) und einem weiteren in den Verbrennungsluftkanal (19, 20) geschalteten Abschnitt (14) des Wärmetauschers (8), wobei die Zuordnung der gemeinsamen festen Speichermasse des Wärmetauschers (8) zu dessen beiden Abschnitten (13, 14), sich kontinuierlich und periodisch ändert, sowie mit einem dem abkühlenden Abschnitt (13) des Wärmetauschers (8) nachgeschalteten, einen Bodenrost (15) aufweisenden und Absorbentien enthaltenden Rauchgaskanalabschnitt. Eine Einrichtung der obengenannten Art ist aus US-A 3 780 498 bekannt.

Die Erfindung betrifft ferner ein Verfahren zur trockenen Reinigung von mit gasförmigen Schadstoffen, insbesondere Schwefelverbindungen verunreinigten Rauchgasen aus der Verbrennung fossiler Brennstoffe in einem Absorbentien enthaltenden Wirbelbett, sowie ein derartiges Verfahren zum Betreiben der obenerwähnten Einrichtung.

Für die Abscheidung von gasförmigen Bestandteilen, wie $SO_2$, Cl, F, $NO_x$ und dergleichen, aus Rauchgasen hat man bisher nahezu ausschliesslich Nassverfahren eingesetzt. Dabei werden die abzuscheidenden Bestandteile mit Hilfe von in Wasser gelösten Absorbentien aus dem Gasstrom ausgewaschen. Infolge der für die Auswaschung erforderlichen grossen Wassermengen ergeben sich hohe Betriebskosten. Die Rauchgase müssen dabei mindestens bis zur Sättigungstemperatur (ca. 55°C) abgekühlt und nach der Reinigung zwecks Ablassens über einen Kamin wieder aufgeheizt werden (ca. 100°C). Ausserdem müssen wegen Unterschreitung des Schwefelsäure- und des Wassertaupunktes hochwertigen Materialien, insbesondere hochwertige Edelstähle bzw. gummi-/kunststoffbeschichtete Stahlwerkstoffe, eingesetzt werden.

Um diese Nachteile zu vermeiden, wurden auch schon Trockenverfahren vorgeschlagen, die jedoch aus verschiedenen Gründen bisher nicht zum Einsatz gekommen sind.

Für die trockene Rauchgasreinigung ist eine Einrichtung bekanntgeworden (DE-A 3 009 366), bei der die Rauchgase mit hoher Temperatur von ca. 700 bis 900 Grad Celsius durch ein Wirbelbett geleitet werden, das die Absorbentien, z.B. Calcium- und/oder Magnesiumverbindungen, enthält. Aus dem Wirbelbett werden ständig verbrauchte Absorbentien abgezogen, die durch frische Absorbentien ersetzt werden. Das Wirbelbett füllt den Querschnitt des Rauchgaskanals vollständig aus. Der Bodenrost des Wirbelbettes ist gekühlt. Als Kühlmittel kann Luft verwendet werden, die anschliessend als vorgewärmte Verbrennungsluft dem Kessel zugeführt wird. Diese Einrichtung ist in verschiedener Hinsicht nachteilig. Damit das Rauchgas, wie vorgesehen, über einen Kamin abgelassen werden kann, muss die Abscheidung der gasförmigen Schadstoffe, insbesondere der Schwefelverbindungen, im Wirbelbett praktisch vollständig erfolgen. Das aber erfordert entsprechend lange Verweilzeiten des Rauchgases im Bereich des Wirbelbettes mit entweder entsprechend geringer Durchsatzleistung oder aber grosser Wirbelbetthöhe mit erheblichem Druckverlust des Rauchgases. Die hohe Gastemperatur bedingt grosse Volumendurchsatzraten. Um ein Austragen der verbrauchten Absorbentien mit dem Rauchgas zu vermeiden, dürfen diese eine Mindestkorngrösse nicht unterschreiten. Das hat zur Folge, dass sie nur unvollständig mit den Schadstoffen reagieren können und nur teilweise verbrauchtes Absorptionsmaterial aus dem Wirbelbett abgezogen wird. Infolge der geringen Kühlluftmenge leistet die Luftvorwärmung im Wirbelbett-Bodenrost keinen nennenswerten Beitrag zur Energiebilanz.

Aufgabe der Erfindung ist es die Energiebilanz einer Einrichtung der eingangs beschriebenen Art zu verbessern, somit die Betriebs- und Investitionskosten zu senken und dabei Abscheidegrade für die Schadstoffe zu erzielen, die denen von Nassverfahren gleichwertig sind.

Diese Aufgabe wird dadurch gelöst, dass in dem dem Wärmetauscher (8) nachgeschalteten Rauchgaskanal-Abschnitt ein vom Rauchgas betriebenes Wirbelbett mit einem körnigen Trägerwerkstoff und mit einer Zuführung für die Absorbentien ausgebildet ist und dass dem Wirbelbett im Rauchgaskanal ein Filter folgt.

Bei der erfindungsgemässen Einrichtung werden die zu reinigenden Rauchgase durch den kalten Abschnitt des Wärmetauschers geleitet, wodurch die Rauchgase stark abgekühlt werden und die Reaktionstemperatur im Wirbelbett niedrig ist. Andererseits wird die Verbrennungsluft stärker aufgeheizt, so dass der Kesselwirkungsgrad sich erhöht. Es versteht sich, dass dem Wirbelbett stets neue Absorbentien nach Massgabe dessen Verbrauchs zugeführt werden. Die Wirbelschicht selbst kann beispielsweise aus einem feinkörnigen Quarz, Korngrösse kleiner 2 mm, bestehen. Zweckmässig besteht nämlich der Trägerwerkstoff des Wirbelbettes aus einem genügend harten Material, das am Absorbentienmaterial austragfähigen Abrieb erzeugt, so dass eine ständige Aktivierung erfolgt. Gegebenenfalls kann es vorteilhaft sein, in die Wirbelschicht Dampf einzublasen, um die Rekationen zu verbessern. Die das Wirbelbett verlassenden Rauchgase werden anschliessend in einem Filter von den mitgeführten staubförmigen Partikeln, vorrangig feinkörnige ausreagierte Absorbentien, befreit. Das Filter bildet eine zweite reaktive Absorptionssicht, in der eine Nachabscheidung gasförmiger Schadstoffreste stattfindet.

Es hat sich überraschend gezeigt, dass eine niedrige Rauchgastemperatur im Wirbelbett schon dort hohe Abscheidegrade begünstigt und insbesondere die Abscheidung des Schwefeldioxids als Absorbentiensulfat fördert. Demzufolge ist der Filteraustrag vielfach ohne weitere Nachbehandlung als Baustoff verwendbar.

Weitere vorteilhafte Ausbildungen der erfindungsgemässen Einrichtung sind den Unteransprüchen 2–14 zu entnehmen. Eine zweckmässige Arbeitsweise ist Inhalt der Patentansprüche 15 und 16.

Zweckmässig sind das Wirbelbett mit Bodenrost und der regenerative Wärmetauscher in einem gemeinsamen Gehäuse angeordnet, und ein erster sektorieller (segmentartiger) Abschnitt des Gehäuses ist eingangsseitig und ausgangsseitig mit dem Rauchgaskanal verbunden, während ein zweiter sektorieller (segmentartiger) Abschnitt des Gehäuses in den Verbrennungsluftkanal geschaltet ist und der regenerative Speichermassenkörper unterhalb des Wirbelbettes angeordnet ist. Das ermöglicht eine sehr kompakte Bauweise der Gesamtanlage, weil die jeweils nur Sektoren bzw. Kreissegmente überdeckenden Anschlüsse von Rauchgaskanal und Verbrennungsluftkanal bei maximaler Ausnutzung der zur Verfügung stehenden Querschnittsfläche im Kesselhaus nur wenig Platz beanspruchen. Hinzu kommt, dass Hilfseinrichtungen für den Teillastbetrieb in dem gemeinsamen Gehäuse einfacher und wirksamer auszubilden sind.

Bei der einfachsten Ausführungsform ist das Wirbelbett mit Bodenrost im Gehäuse feststehend ausgebildet, während der regenerative Speichermassenkörper des Wärmetauschers um eine koaxiale Achse rotiert.

Vorzugsweise besteht der Speichermassenkörper des Wärmetauschers aus in Umfangsrichtung mit Abstand radial angeordneten Blechpaketen, so dass Rauchgas und Verbrennungsluft in diesem Bereich vertikal strömend geführt werden.

Wenn in die Reinigungseinrichtung staubhaltiges Rauchgas einströmt, das vorher nicht genügend gefiltert worden ist, empfiehlt es sich gemäss Anspruch 6 das Gehäuse mit einem dritten annähernd sektoriellen Abschnitt für im Kreislauf geführte Reinigungsluft auszurüsten, damit keine Stäube in die Verbrennungsluft verschleppt werden.

Die Anordnung der genannten Bauteile in einem Gehäuse ermöglicht es, das Wirbelbett mit Bodenrost und den regenerativen Speichermassenkörper koaxial übereinanderliegend als ein miteinander festverbundenes Bauteil auszubilden, so dass gemäss Anspruch 7 einerseits das Wirbelbett mit Bodenrost und der regenerative Speichermassenkörper und andererseits die sektoriellen bzw. segmentartigen Abschnitte des Gehäuses für das Rauchgas und den mindestens einen Luftkanal gegeneinander relativbeweglich rotierend angetrieben sein können. Das ermöglicht im einzelnen Ausführungsformen gemäss den Ansprüchen 8 und 9, wonach entweder Wirbelbett und Speichermassenkörper feststehend ausgebildet und sektorielle bzw. segmentartige Teile des Gehäuses rotieren oder umgekehrt. Auf diese Weise können für den jeweiligen Anwendungsfall optimierte Reinigungseinrichtungen verwirklicht werden, die mit angemessenem apparativem Aufwand bei hohen Abscheidegraden der Schadstoffe die Rauchgaswärme weitgehend in die Verbrennungluft zurückführen und somit die Energiegesamtbilanz der Ofen- bzw. Kesselanlage erheblich verbessern.

Da mit den für $SO_2$ und dergleichen geeigneten Absorbentien Schadstoffe wie $NO_x$ nur in geringem Masse abgeschieden werden, kann das Wirbelbett so ausgebildet sein, dass es gesonderte Abscheideschichten für einerseits $SO_2$, $SO_3$, Cl und F sowie andererseits $NO_x$ aufweist. Die verschiedenen Abscheideschichten werden zweckmässig übereinander angeordnet.

Um ein möglichst sauberes Gipsmaterial zu erhalten, empfiehlt es sich, im Rauchgaskanal vor dem Wirbelbett ein Staubfilter mit hohem Abscheidegrad anzuordnen, in dem die vom Rauchgas mitgeführten Feststoffanteile abgeschieden werden. Im Wirbelbett werden dann lediglich die gasförmigen Schadstoffe an die festen Absorbentien gebunden und als feine Partikel bis zum nachgeschalteten Filter mitgeführt, in dem sie ggf. nachreagieren und ausgeschieden werden. Das aus dem Filter abgezogene Material besteht weitgehend aus Gips. Für Verwendungszwecke, bei denen Chlorid- und/oder Sulfitanteile des Materials unerwünscht sind, kann eine übliche Nachbehandlung, beispielsweise durch Auswaschen des Calciumchlorids und Oxidation des Sulfits zu Calciumsulfat durchgeführt werden.

Eine überraschung wirkungsvolle Massnahme bei der Schadstoffbeseitigung aus Rauchgasen mittels eines Wirbelbettes besteht nach Anspruch 15 darin, dass das zu reinigende Rauchgas vor seinem Eintritt in das Wirbelbett auf eine Temperatur im Bereich von 140 bis 350°C abgekühlt wird, und dass das das Wirbelbett verlassende, feinkörnige ausreagierte Absorbentien enthaltende Rauchgas durch Nachschalten eines Filters nachgereinigt wird, so dass vorzugsweise nach Anspruch 16, entsprechend dem Wärmeenergiebedarf des jeweiligen Wirbelbettes die Rauchgaseintrittstemperatur angemessen oberhalb 120°C (= Taupunkt von schwefliger Säure und von Schwefelsäure) und die Rauchgasaustrittstemperatur unter 120°C liegt. Das gewährleistet einen hohen Abscheidegrad und verhindert Säureabscheidung in nachfolgenden Anlageteilen, die ohne besondere Korrosionsbeständigkeit, z.B. aus Normalstahl bzw. Kesselblech, hergestellt sein können.

Im folgenden werden in der Zeichnung dargestellte Ausführungsbeispiele der Erfindung erläutert; es zeigen:

Fig. 1 in schematischer Darstellung eine Kesselanlage mit einer Einrichtung für die trockene Rauchgasreinigung und einer nachgeschalteten Anlage zur Gipsbehandlung

Fig. 2 im Ausschnitt von Fig. 1 die Einrichtung für die trockene Rauchgasreinigung mit feststehendem Wirbelbett und rotierendem regenerativem Wärmetauscher

Fig. 3 den Querschnitt längs der Linie III–III aus Fig. 2

Fig. 4 eine andere Ausführungsform der Einrichtung nach Fig. 2 mit rotierendem Wirbelbett

Fig. 5 den Querschnitt längs der Linie V–V in Fig. 4

Fig. 6 schematisch den Querschnitt längs der Linie VI–VI in den Figuren 2 und 4 mit zwei segmentartigen Gehäuseabschnitten

Fig. 7 drei sektorielle bzw. segmentartige Gehäuseabschnitte einer im einzelnen nicht dargestellten Ausführungsform

Fig. 8 im Ausschnitt aus Fig. 1 eine weitere Ausführungsform

Fig. 9 schematisch die sektoriellen Gehäuseabschnitte gemäss dem Querschnitt längs der Linie IX–IX in Fig. 8

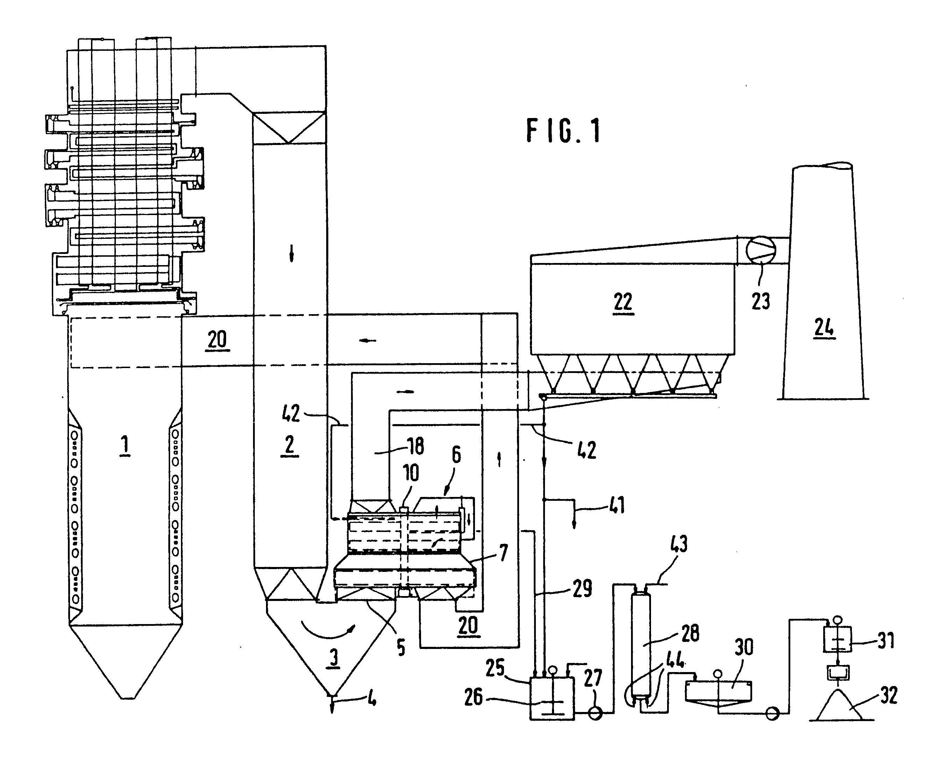

Bei der in Figur 1 dargestellten Anlage gelangt das Rauchgas aus einem Kessel 1 über einen Rauchgaskanal 2 zunächst in einen Staubabscheider 3, aus dem der sich ansammelnde Staub in bekannter Weise in Richtung des Pfeils 4 abgeführt wird. Entsprechend den Anforderungen des bei der nachfolgenden Rauchgasreinigung erhaltenen Gipsmaterials kann der Staubabscheider 3 beispielsweise ein Zentrifugalabscheider sein oder bei gebotenem hohem Abscheidegrad für Rauchgasstaub als Heissgasfilter ausgebildet sein. An den Staubabscheider 3 schliesst ein Rauchgaskanalabschnitt 5 an, der unter einer Einrichtung 6 zur trockenen Rauchgasreinigung endet, die in einem gemeinsamen Gehäuse 7 untergebracht ist.

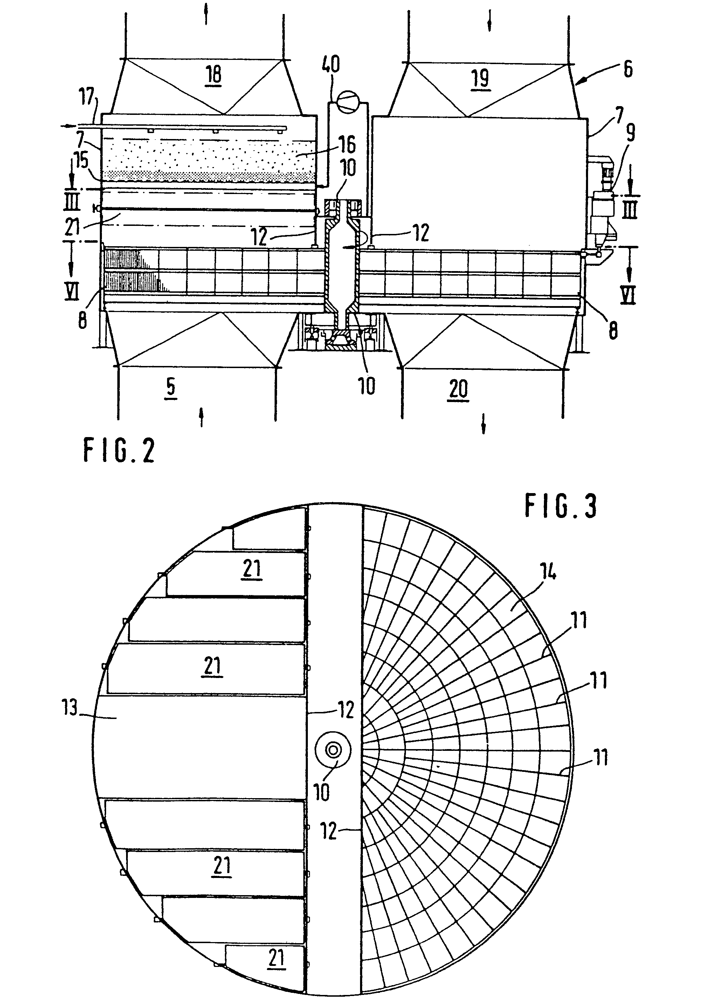

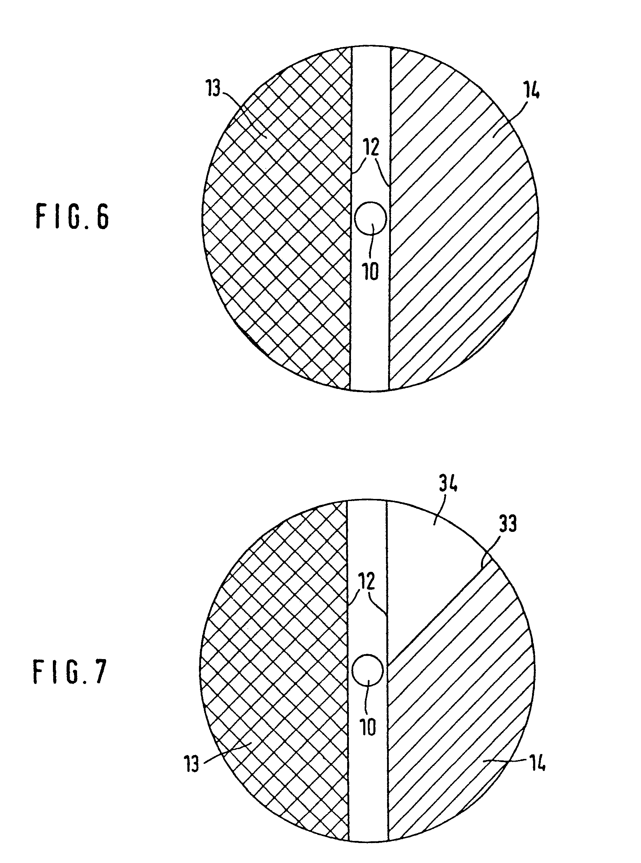

Bei der Ausführungsform der Einrichtung 6 nach den Figuren 2 und 3 ist in dem feststehenden Gehäuse 7 im unteren Bereich ein regenerativer, im horizontalen Querschnitt kreisförmiger Wärmetauscher 8 angeordnet, der über den Antrieb 9 um die Welle 10 rotierend ausgebildet ist. Der an sich bekannte Wärmetauscher besteht aus in Umfangsrichtung mit Abstand radial angeordneten, vertikalen Blechpaketen 11 (Fig. 3). Das unten im Querschnitt kreisförmige Gehäuse 7 ist durch zwei innere Trennwände 12 in zwei segmentartige Abschnitte 13, 14 aufgeteilt, die sich nach oben jeweils turmartig fortsetzen. Fig. 6 verdeutlicht schematisch die feststehenden Gehäusesegmente 13 und 14 des Querschnitts gemäss der Linie VI–VI in Fig. 2. Über dem ersten segmentartigen Abschnitt 13 des Gehäuses 7, in dem sich das Rauchgas abkühlt, ist oberhalb des Bodenrostes 15 ein Wirbelbett 16 angeordnet, das über die Lanze 17 mit Absorbentien beschickt wird. Über den Rauchgaskanalabschnitt 18 wird das behandelte Rauchgas weitergeführt. Der zweite segmentartige Abschnitt 14 des Gehäuses 7 ist an die Kanalabschnitte 19, 20 für Verbrennungsluft angeschlossen. Die Verbrennungsluft wird dort aufgewärmt, indem die heissen Blechpakete 11 ihren Wärmeinhalt an die Verbrennungsluft abgeben.

Die Wirbelschicht 16 wird durch das Rauchgas betrieben. Sie besteht aus feinkörnigem Quarz mit einer Korngrösse kleiner 2 mm und einem Absorptionsmittel in feiner Form, vorzugsweise mit einer handelsüblichen Korngrösse von unter etwa 200 µm, aus einer oder mehreren Calciumverbindungen. Diese Verbindungen reagieren mit von den Rauchgasen mitgeführten gasförmigen Schadstoffen, wie $SO_2$, Cl, F und dergleichen. Die aus «Quarz» bestehende Grundmasse des Wirbelbettes ist wesentlich härter als die Absorptionsmittel, so dass letztere im Betrieb infolge Mahlens zunehmend feinkörniger werden und daher sehr lange hoch reaktionsfähig bleiben, wobei der Abrieb und schliesslich auch das Restkorn mit dem Rauchgas ausgetragen werden. Zur Anpassung an Teillastbetrieb, wie er bei Kesselanlagen vielfach vorkommt, sind zwischen Wirbelbett 16 und Wärmetauscher 8 drehbare Klappen 21 angeordnet, die in Sperrstellung den Durchschnittsquerschnitt für das Rauchgas in angemessener Stufung zu reduzieren gestatten zwecks Anpassung an variable Rauchgasmengenraten. Die Absaugleitung 40 führt zwischen die Trennwände 12 gelangendes Rauchgas unter die Wirbelschicht 16 zurück.

An die Oberseite der Einrichtung 6 schliesst ein Rauchgaskanalabschnitt 18 an (Fig. 1), durch den die behandelten Rauchgase zu einem Filter 22 gelangen, der beispielsweise ein Gewebefilter oder ein Elektrofilter sein kann. Die von den Rauchgasen mitgeführten feinkörnigen Partikel beinhalten im wesentlichen das ausreagierte Absorptionsmittel. Sie setzen sich an dem Filtergewebe ab und bilden dort eine weitere Absorptionsschicht aus vorrangig Calciumsulfat und Calciumsulfit. Die gereinigten Rauchgase gelangen über einen Saugzug 23 in den Kamin 24. Das aus dem Filter 22 ausgetragene Sulfat-/Sulfitgemisch kann in der vorliegenden Form, z.B. als Zuschlag zu Zement, verwendet werden und wird hierfür am Abzug 41 ausgetragen. Eine Rückführleitung 42 ermöglicht im Bedarfsfall eine wiederholte Gutbehandlung in der Wirbelschicht 16.

Für Verwendungszwecke mit hohen Reinheitsanforderungen, z.B. bei Putzgipsen, bei denen Sulfit- und Chloridbestandteile störend sind, kann eine übliche Nachbehandlung des Materials durchgeführt werden. Dazu wird es einem Behälter 25 mit Rührwerk 26 zugeleitet und dort mit Wasser vermischt. In den Behälter 25 werden gegebenenfalls auch solche verbrauchten Absorbentien übergeführt (Leitung 29), die nicht aus dem Wirbelbett 16 ausgetragen werden. Mittels einer Pumpe 27 wird das Gemisch aus dem Behälter 25 in einen Oxidationsbehälter 28 gefördert, dem bei 43 Schwefelsäure zugeführt wird und der mit von unten bei 44 zugeführter Luft durchspült wird. Dabei bildet sich Reingips, der in einem dem Oxidationsbehälter 28 nachgeschalteten Absetzbecken 30 ausfällt, in einer Zentrifuge 31 entwässert und einer Lagerung 32 zugeführt wird.

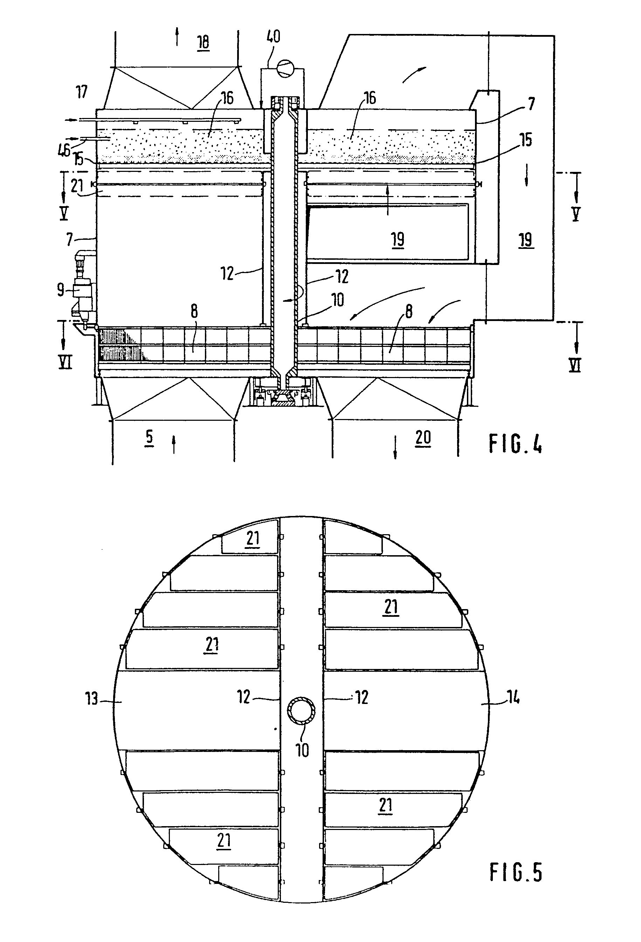

Bei der Ausführungsform der Reinigungseinrichtung 6 nach den Figuren 4 bis 6 ist das Rauchgas über die Kanalabschnitte 5, 18 und die Verbrennungsluft über die Kanalabschnitte 19, 20 an das feststehende Gehäuse 7 angeschlossen, das durch die beiden inneren Trennwände 12 in zwei segmentartige Abschnitte 13, 14 (Fig. 5) aufgeteilt ist. Das Wirbelbett 16 mit Bodenrost 15 und der regenerative Speichermassenkörper 8 sind im Querschnitt kreisförmig gestaltet, koaxial übereinanderliegend angeordnet und über die drehbar gelagerte Welle 10 fest miteinander verbunden; sie werden von dem Antrieb 9 in Drehbewegung gehalten. Das Rauchgas strömt in seinem Gehäusesegment 13 vom Wärmetauscher zum Wirbelbett; die Verbrennungsluft strömt in ihrem Gehäusesegment 14 zunächst durch das Wirbelbett und nach dem äusseren Kanalabschnitt 19 durch den Wärmetauscher. Figur 6 zeigt schematisch verdeutlicht die Aufteilung des Gehäuses 7 in ein feststehendes Rauchgas-Segment 13 und ein feststehendes Verbrennungsluft-Segment 14, denengegenüber der regenerative Speichermassenkörper 8 und das Wirbelbett 16 mit Bodenrost 15 kontinuierlich rotierend ausgebildet sind.

Bei einer weiteren Ausführungsform hat die Einrichtung 6 noch einen weiteren Luftkanal, in dem Reinigungsluft im Kreislauf geführt wird. Dementsprechend hat das feststehende Gehäuse 7 drei sektorielle bzw. segmentartige Abschnitte, wie es in Fig. 7 schematisch dargestellt ist. In Drehrichtung des Wirbelbettes 16 und des regenerativen Wärmetauschers 8 schliesst an das Rauchgassegment 13 ein kleinerer Sektor 34 an, der etwa 1/8 der Kreisfläche einnimmt. Im Bereich dieses Sektors 34, der durch die Trennwand 33 vom Verbrennungsluft-Sektor 14 abgeteilt ist, schliessen an die Einrichtung 6 oben und unten nicht dargestellte Kanalabschnitte für heisse Reinigungsluft an, so dass die im Wirbelbett und am Bodenrost abgelagerten Staubteilchen ausgetragen werden und nicht in die Verbrennungsluft gelangen. Das ist vorteilhaft, wenn der Staubabscheider 3 (Fig. 1) mit einem niedrigen Abscheidegrad arbeitet, beispielsweise bei Zentrifugalabscheidern. Im übrigen entspricht die Einrichtung 6 in den wesentlichen Bauteilen der Ausführung nach den Figuren 2 oder 4.

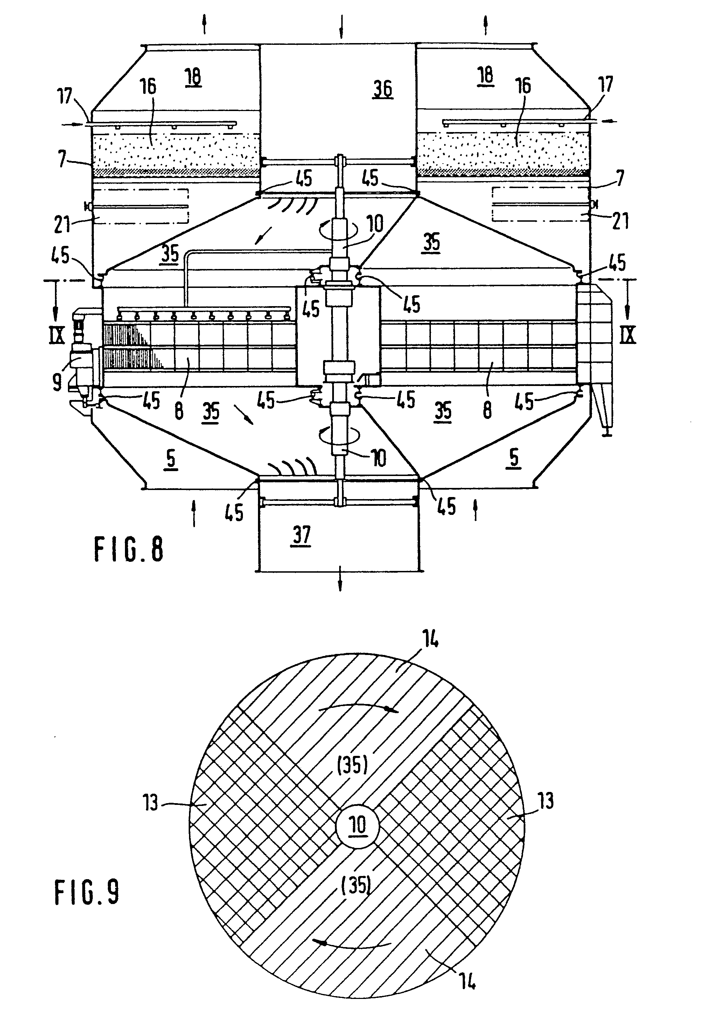

In Fig. 8 ist die Reinigungseinrichtung 6 dargestellt in einer Ausführungsform mit einem im ruhenden Gehäuse 7 feststehenden Wirbelbett 16 mit Bodenrost 15 und feststehenden Wärmetauscher 8, die im Querschnitt kreis- bzw. kreisringförmig ausgebildet und koaxial übereinanderliegend angeordnet sind. Unmittelbar oberhalb und unterhalb des Wärmetauschers 8 ist im Innern des Gehäuses 7 je eine doppelflügelige Drehhaube 35, von Drehlagern 45 getragen, mittels Welle 10 und Antrieb 9 synchron rotierend ausgebildet. Über die beiden Hauben 35 ist die Verbrennungsluft zwischen den zentralen Kanalabschnitten 36, 37 geführt. Das Wirbelbett 16 befindet sich ausschliesslich im Rauchgaskanal mit einem vorteilhaft grossen Strömungsquerschnitt. Fig. 9 zeigt schematisch die zur Ausführungsform nach Fig. 8 gehörigen zwei Paare einander gegenüberliegender Sektoren 13 für Rauchgas bzw. 14 für Verbrennungsluft, die von den beiden synchron laufenden Drehhauben 35 ausgebildet werden. Entsprechend rotieren die genannten Sektoren gegenüber dem Gehäuse 7, insbesondere dem feststehenden Wärmetauscher 8 und dem feststehenden Wirbelbett 16.

Gips mit hoher Fremdkörperreinheit erhält man bei den Ausführungsformen, die – wie schon erwähnt – als Staubabscheider 3 einen Heissgasfilter aufweisen. Ist der Abscheider 3 z.B. ein Zentrifugalabscheider, dann gelangen Feinstaubteilchen in das Filter 22 und werden in den Anlagenteilen 25–32 mitverarbeitet, so dass zwar kein Reingips entsteht, aber ein gleichwohl brauchbarer, billiger hydraulisch abbindender Bauwerkstoff erhalten wird.

Bei den geschilderten Einrichtungen wird ein sehr hoher Anteil des Schwefelgehaltes des Rauchgases schon im Wirbelbett als Feststoff ausgeschieden. Nach dem Gewebefilter ergibt sich meist ein Abscheidegrad von über 85%, so dass Nassreinigungsanlagen nicht mehr überlegen sind. Insbesondere besteht das aus dem Filter 22 abgezogene Produkt weitgehend aus Calciumsulfat mit vielfach nicht mehr störenden Calciumsulfit- und -chloridanteilen, so dass eine waschende und oxidierende Nachbehandlung ggf. auch entfallen kann.

Die Rauchgasaustrittstemperatur am Wirbelbett 16 kann sehr niedrig nämlich unter 120°C liegen und ggf. bis auf ca. 80°C abgesenkt werden. Bei dem dadurch erzielten hohen Abscheidegrad wird der Schwefelsäure-Taupunkt (ca. 120°C) unkritisch, so dass nur noch der Wasser-Taupunkt (40–50°C) beachtet werden muss. Die Rauchgaseintrittstemperatur am Wirbelbett 16 kann beispielsweise ca. 160°C betragen. Durch die Massnahme, den Säure-Taupunkt in die Wirbelschicht zu legen, wird eine flüssige Phase der schwefligen Säure an den Korn-Oberflächen des Wirbelbettes erreicht und damit hervorragende Voraussetzungen für die $SO_2$-Absorption geschaffen. Darüber hinaus wird vermieden, dass in den dem Wirbelbett nachgeschalteten Anlagenteilen infolge Rauchgasabkühlung unter den Säuretaupunkt sich schweflige Säure und Schwefelsäure flüssig abscheiden, die zusammen mit dem vorhandenen Staub und Chlorgas hochaggressiv sind. Die grosse Wärmeenergieübernahme vom Rauchgas in die Verbrennungsluft macht den Betrieb des Kessels 1 wirtschaftlicher.

Bezugszeichenliste
1 Kessel
2 Rauchgaskanal
3 Staubabscheider
4 Pfeil
5 Rauchgaskanalabschnitt
6 Reinigungseinrichtung
7 Gehäuse
8 regenerativer Wärmetauscher
9 Antrieb
10 Welle
11 Blechpakete von 8
12 Trennwand

13 sektorieller (segmentartiger) Abschnitt von 7 (Rauchgas)
14 sektorieller (segmentartiger) Abschnitt von 7 (Verbrennungsluft)
15 Bodenrost
16 Wirbelbett
17 Beschickungslanze
18 Rauchgaskanalabschnitt
19 Kanalabschnitt für Verbrennungsluft
20 Kanalabschnitt für Verbrennungsluft
21 Klappen
22 Filter
23 Saugzug
24 Kamin
25 Behälter
26 Rührwerk
27 Pumpe
28 Oxydationsbehälter
29 Leitung
30 Absetzbecken
31 Zentrifuge
32 Lagerstelle
33 Trennwand
34 sektorieller Abschnitt
35 Drehhaube
36 Kanalabschnitt
37 Kanalabschnitt
40 Absaugleitung
41 Abzug
42 Rückführleitung
43 Schwefelsäurezugabe
44 Luftzuführung
45 Drehlager
46 Dampfeinführungslanze

**Patentansprüche**

1. Einrichtung zur trockenen Reinigung von mit gasförmigen Schadstoffen, insbesondere Schwefelverbindungen, verunreinigten Rauchgasen aus der Verbrennung fossiler Brennstoffe, vornehmlich in Kesselanlagen und Öfen, mit einem im Rauchgaskanal (18) angeordneten, das Rauchgas abkühlenden Abschnitt (13) eines regenerativen Wärmetauschers (8) und einem weiteren in den Verbrennungsluftkanal (19, 20) geschalteten Abschnitt (14) des Wärmetauschers (8), wobei die Zuordnung der gemeinsamen festen Speichermasse des Wärmetauschers (8) zu dessen beiden Abschnitten (13, 14) sich kontinuierlich und periodisch ändert, sowie mit einem dem abkühlenden Abschnitt (13) des Wärmetauschers (8) nachgeschalteten, einen Bodenrost (15) aufweisenden und Absorbentien enthaltenden Rauchgaskanalabschnitt, dadurch gekennzeichnet, dass in dem dem Wärmetauscher (8) nachgeschalteten Rauchgaskanal-Abschnitt ein vom Rauchgas betriebenes Wirbelbett mit einem körnigen Trägerwerkstoff und mit einer Zuführung (17) für die Absorbentien ausgebildet ist und dass dem Wirbelbett (16) im Rauchgaskanal (18) ein Filter (22) folgt.

2. Einrichtung nach Anspruch 1, dadurch gekennzeichnet, dass das Wirbelbett (16) mit Bodenrost (15) und der regenerative Wärmetauscher (8) in einem gemeinsamen Gehäuse (7) angeordnet sind, dass ein erster sektorieller (segmentartiger) Abschnitt (13) des Gehäuses eingangs- und ausgangsseitig mit dem Rauchgaskanal (5, 18) verbunden ist und ein zweiter sektorieller (segmentartiger) Abschnitt (14) des Gehäuses in den Verbrennungsluftkanal (19, 20) geschaltet ist und dass der regenerative Speichermassenkörper des Wärmetauschers (8) unterhalb des Wirbelbettes (16) angeordnet ist.

3. Einrichtung nach Anspruch 2, dadurch gekennzeichnet, dass das Wirbelbett (16) mit Bodenrost (15) im Gehäuse (7) feststehend ausgebildet ist und der regenerative Speichermassenkörper des Wärmetauschers (8) um eine koaxiale Achse (10) rotiert.

4. Einrichtung nach Anspruch 2, dadurch gekennzeichnet, dass das Wirbelbett (16) mit Bodenrost (15) und der regenerative Speichermassenkörper des Wärmetauschers (8) übereinanderliegend koaxial angeordnet sind und ein miteinander fest verbundenes Bauteil bilden.

5. Einrichtung nach einem der Ansprüche 1 bis 4, dadurch gekennzeichnet, dass der regenerative Speichermassenkörper des Wärmetauschers (8) aus in Umfangsrichtung mit Abstand radial angeordneten vertikalen Blechpaketen (11) besteht.

6. Einrichtung nach einem der Ansprüche 2 bis 5, dadurch gekennzeichnet, dass das Gehäuse (7) einen weiteren sektoriellen Abschnitt (24) aufweist, der an einen im Kreislauf mit Filter geführten Reinigungsluftkanal angeschlossen ist und zwischen den sektoriellen Gehäuseabschnitten (13, 14) für das Rauchgas und die Verbrennungsluft angeordnet ist.

7. Einrichtung nach Anspruch 4, 5 oder 6, dadurch gekennzeichnet, dass einerseits das Wirbelbett (16) mit Bodenrost (15) und der regenerative Speichermassenkörper des Wärmetauschers (8) und andererseits sektorielle (segmentartige) Abschnitte (13, 14; 34) des Gehäuses (7) für das Rauchgas und den mindestens einen Luftkanal gegeneinander relativbeweglich rotierend ausgebildet sind.

8. Einrichtung nach einem der bisherigen Ansprüche, insbesondere nach den Ansprüchen 4, 5 und 7, dadurch gekennzeichnet, dass das Wirbelbett (16) mit Bodenrost (15) und der regenerative Speichermassenkörper des Wärmetauschers (8) um eine vertikale Achse (10) drehbar ausgebildet sind, dass die sektoriellen (segmentartigen) Abschnitte (13, 14) des Gehäuses (7) für das Rauchgas und für die Verbrennungs- bzw. Reinigungsluft feststehend ausgebildet und mit dem Rauchgaskanal (2, 5, 18) und dem mindestens einen Verbrennungsluftkanal (19, 20) fest verbunden sind.

9. Einrichtung nach Anspruch 8, dadurch gekennzeichnet, dass die sektoriellen, rotierenden inneren Abschnitte des Gehäuses (7) von je einer den Speichermassenkörper des Wärmetauschers (8) unten und oben sektoriell abdeckenden, doppelflügeligen Drehhaube (35) gebildet werden, die an einen zentrisch angeordneten Verbrennungsluftkanal (36, 37) angeschlossen ist.

10. Einrichtung nach einem der Ansprüche 1 bis 9, dadurch gekennzeichnet, dass das Wirbelbett (16) gesonderte Abscheideschichten für einerseits SO₂, C1 und F sowie andererseits für NO$_x$ aufweist.

11. Einrichtung nach Anspruch 10, dadurch gekennzeichnet, dass die verschiedenen Abscheideschichten übereinander angeordnet sind.

12. Einrichtung nach einem der Ansprüche 1 bis 11, dadurch gekennzeichnet, dass in das Wirbelbett (16) eine Dampfeinführungslanze (46) mündet (Fig. 4).

13. Einrichtung nach einem der Ansprüche 1 bis 12, dadurch gekennzeichnet, dass im Rauchgaskanal (2, 5, 18) vor dem Wirbelbett (16) ein Staubfilter (3) mit hohem Abscheidegrad angeordnet ist.

14. Einrichtung nach Anspruch 13, dadurch gekennzeichnet, dass sie einen Rauchgaskanal (2, 5, 18) und einen Verbrennungsluftkanal (19, 20) hat, die den Querschnitt des regenerativen Wärmetauschers (8) und des Wirbelbetts (16) mit Bodenrost (15) in zwei Kreissegmente (13, 14) aufteilen.

15. Verfahren zur trockenen Reinigung von mit gasförmigen Schadstoffen, insbesondere Schwefelverbindungen verunreinigten Rauchgasen aus der Verbrennung fossiler Brennstoffe in einem Absorbentien enthaltenden Wirbelbett, dadurch gekennzeichnet, dass das zu reinigende Rauchgas vor seinem Eintritt in das Wirbelbett auf eine Temperatur im Bereich von 140° bis 350°C abgekühlt wird, und dass das das Wirbelbett verlassende, feinkörnige Absorbation enthaltende Rauchgas durch Nachschalten eines Filters nachgereinigt wird.

16. Verfahren nach Anspruch 15 zum Betreiben der Einrichtung nach einem der Ansprüche 1 bis 14, dadurch gekennzeichnet, dass der durch die Rauchgas-Eintrittstemperatur und die -Austrittstemperatur am Wirbelbett (16) definierte Temperaturbereich so eingestellt wird, dass er den Taupunkt von 120°C der Schwefelsäure (schwefelige Säure) umfasst.

**Claims**

1. Apparatus for the dry cleaning of flue gases which are fouled with gaseous noxious substances, especially sulphur compounds, and which emanate from the burning of fossil fuels especially in boiler plants and ovens, with a section (13) of a regenerative heat exchanger (8) which cools the flue gas and which is arranged in the flue gas duct (18) and with a further section (14) of heat exchanger (8) which is interposed in the combustion air duct (19, 20), the association of the joint solid storage material of the heat exchanger (8) with the two sections (13, 14) thereof varying continuously and periodically, and also with a flue gas duct section which is situated downstream of the cooling section (13) of the heat exchanger (8) and which comprises a bottom grate (15) and contains absorbents, characterised in that in the flue gas duct section which is downstream of the heat exchanger (8) a fluidised bed operated by the flue gas is arranged which has a granular carrier material and has a feed duct (17) for the absorbents, and that a filter (22) is arranged in the flue gas duct (18) after the fluidised bed (16).

2. Apparatus according to claim 1, characterised in that the fluidised bed (16) with bottom grate (15) and the regenerative heat exchanger (8) are arranged in a common housing (7), that a first sectoral (segmental) section (13) of the housing is connected at input and output sides to the flue gas duct (5, 18), and a second sectoral (segmental) section (14) of the housing is interposed in the combustion air duct (19, 20), and that the regenerative storage material body of the heat exchanger (8) is arranged below the fluidised bed (16).

3. Apparatus according to claim 2, characterised in that the fluidised bed (16) with bottom grate (15) is constructed to be stationary in the housing (7), and the regenerative storage material body of the heat exchanger (8) rotates about a coaxial pivot (10).

4. Apparatus according to claim 2, characterised in that the fluidised bed (16) with bottom grate (15) and the regenerative storage material body of the heat exchanger (8) are arranged situated one above the other coaxially, and form a securely inter-connected unit.

5. Apparatus according to one of claims 1 to 4, characterised in that the regenerative storage material body of the heat exchanger (8) consists of vertical sheet metal element packs (11) arranged radially with spacing circumferentially.

6. Apparatus according to one of claims 2 to 5, characterised in that the housing (7) has a further sectoral section (34) which is connected to a purification air duct, taken through a circuit including a filter, and is arranged between the sectoral housing sections (13, 14) for the flue gas and the combustion air.

7. Apparatus according to claim 4, 5 or 6, characterised in that on the one hand the fluidised bed (16) with bottom grate (15) and the regenerative storage material body of the heat exchanger (8) and on the other hand sectoral (segmental) sections (13, 14; 34) of the housing (7) for the flue gas and at least one air duct, are constructed for relative rotational movement with respect to one another.

8. Apparatus according to one of the preceding claims especially according to claims 4, 5 and 7, characterised in that the fluidised bed (16) with bottom grate (15) and the regenerative storage material body of the heat exchanger (8) are constructed to be rotatable about a vertical pivot (10), that the sectoral (segmental) sections (13, 14) of the housing (7) for the flue gas and for the combustion or purification air are of stationary construction and are connected securely to the flue gas duct (2, 5, 18) and to the at least one combustion air duct (19, 20).

9. Apparatus according to claim 8, characterised in that the sectoral, rotating, inner sections of the housing (7) are formed each by a double-winged rotary hood (35) which covers the storage material body of the heat exchanger (8) above and below sectorally and which is connected to a centrally arranged combustion air duct (36, 37).

10. Apparatus according to one of claims 1 to 9, characterised in that the fluidised bed (16) comprises separate separating layers for on the one hand $SO_2$, Cl and F, and on the other hand for $NO_x$.

11. Apparatus according to claim 10, characterised in that the various separating layers are arranged above one another.

12. Apparatus according to one of claims 1 to 11, characterised in that a steam introduction lance (46) opens into the fluidised bed (16) (Fig. 4).

13. Apparatus according to one of claims 1 to 12, characterised in that a dust filter (3) with a high degree of separation is arranged in the flue gas duct (2, 5, 18) upstream of the fluidised bed (16).

14. Apparatus according to claim 13, characterised in that it has a flue gas duct (2, 5, 18) and a combustion air duct (19, 20) which divide the cross-section of the regenerative heat exchanger (8) and of the fluidised bed (16) with bottom grate (15) into two circular segments (13, 14).

15. Method for the dry cleaning of flue gases which are fouled with gaseous noxious substances, especially sulphur compounds, and which emanate from the burning of fossil fuels, in a fluidised bed containing absorbents, characterised in that, before it enters the fluidised bed, the flue gas to be cleaned is cooled to a temperature in the range of 140° to 350°C, and that the flue gas issuing from the fluidised bed, which gas contains fine-grained absorbents, is subjected to after-cleaning by means of a downstream filter.

16. Method according to claim 15 for operating the apparatus according to one of claims 1 to 14, characterised in that the temperature range defined by the flue gas entry temperature and exit temperature at the fluidised bed (16) is so set that it comprehends the dew point of 120°C of sulphuric acid (sulphorous acid).

**Revendications**

1. Dispositif de dépoussiérage par voie sèche des fumées souillées d'éléments polluants gazeux, en particulier de combinaisons soufrées, fumées provenant de la combination de combustibles fossiles, principalement dans des chaudières et fours, avec un tronçon (13) d'échangeur de chaleur régénératif (8), tronçon refroidissant les fumées et situé dans une gaine de fumées (18), et avec un autre tronçon (14) de l'échangeur de chaleur (8), tronçon installé dans la gaine d'air comburant (19, 20), l'affectation de la masse d'accumulateur fixe commune de l'échangeur de chaleur (8) à ses deux tronçons (13, 14) se modifiant de façon continue et périodique, ainsi qu'avec un tronçon de gaine des fumées installé en aval du tronçon refroidissant (13) de l'échangeur de chaleur (8), présentant une grille de fond (15) et contenant les produits absorbants, caractérisé par le fait que, dans le tronçon de gaine de fumées installé en aval de l'échangeur de chaleur (8), est formé un lit fluidisé, actionné par les fumées, équipé d'un matériau porteur granuleux et d'une amenée (17) pour les produits absorbants et un filtre (22) est installé dans la gaine des fumées (18) en aval du lit fluidisé (16).

2. Dispositif selon la revendication 1, caractérisé par le fait que le lit fluidisé (16) avec grille de fond (15) et l'échangeur de chaleur régénératif (8) sont disposés dans une enveloppe commune (7), un premier tronçon (13) sectoriel (segmentaire) d'enveloppe est relié, côté entrée et côté sortie, à la gaine des fumées (5, 18) et un second tronçon (14) sectoriel (segmentaire) d'enveloppe est placé dans la gaine d'air comburant (19, 20) et le corps de masse d'accumulateur régénératif de l'échangeur de chaleur (8) est situé sous le lit fluidisé (16).

3. Dispositif selon la revendication 2, caractérisé par le fait que le lit fluidisé (16) avec grille de fond (15) est fixe dans l'enveloppe (7) et le corps de masse d'accumulateur régénératif de l'échangeur de chaleur (8) tourne autour d'un axe coaxial (10).

4. Dispositif selon la revendication 2, caractérisé par le fait que le lit fluidisé (16) avec grille de fond (15) et le corps de masse d'accumulateur régénératif de l'échangeur de chaleur (8) sont superposés de façon coaxiale et forment un élément de construction fermement lié.

5. Dispositif selon l'une des revendications 1 à 4, caractérisé par le fait que le corps de masse d'accumulateur régénératif (8) se compose de paquets de tôle (11) verticaux disposés de façon radiale à intervalles en direction circonférentielle.

6. Dispositif selon l'une des revendications 2 à 5, caractérisé par le fait que l'enveloppe (7) comporte un autre tronçon sectoriel (34) qui se raccorde à une gaine d'air de dépoussiérage placée dans le circuit avec filtre et qui est disposé entre les tronçons d'enveloppe sectoriels (13, 14) destinés aux fumées et à l'air comburant.

7. Dispositif selon la revendication 4, 5 ou 6, caractérisé par le fait que, d'une part, le lit fluidisé (16) avec grille de fond (15) et le corps de masse d'accumulateur régénératif de l'échangeur de chaleur (8) et, d'autre part, les tronçons sectoriels (segmentaires) (13, 14, 34) de l'enveloppe (7) destinés aux fumées et à au moins une gaine d'air, sont montés rotatifs, relativement les uns par rapport aux autres.

8. Dispositif selon l'une des revendications précédentes, en particulier selon les revendications 4, 5 et 7, caractérisé par le fait que le lit fluidisé (16) avec grille de fond (15) et le corps de masse d'accumulateur régénératif de l'échangeur de chaleur (8) tournent autour d'un axe vertical (10), les tronçons sectoriels (segmentaires) 13, 14) de l'enveloppe (7) destinés aux fumées et à l'air comburant ou de dépoussiérage sont fixes et sont fermement raccordés à la gaine des fumées (2, 5, 18) et à au moins une gaine d'air comburant (19, 20).

9. Dispositif selon la revendication 8, caractérisé par le fait que les tronçons sectoriels intérieurs rotatifs de l'enveloppe (7) se composent chacun d'une chape tournante (35) à ailes doubles et recouvrant le corps de masse d'accumulateur de l'échangeur de chaleur (8) de façon sectorielle, en haut et en bas, ces chapes étant raccordées à une gaine d'air comburant (36, 37) disposée de façon centrale.

10. Dispositif selon l'une des revendications 1 à 9, caractérisé par le fait que le lit fluidisé (16) présente des couches de séparation spécialisées d'un côté pour $SO_2$, Cl et F et, de l'autre côté, pour $NO_x$.

11. Dispositif selon la revendication 10, caractérisé par le fait que les différentes couches de séparation sont superposées.

12. Dispositif selon l'une des revendications 1 à 11, caractérisé par le fait qu'une lance d'introduction de vapeur (46) débouche dans le lit fluidisé (16) (figure 4).

13. Dispositif selon l'une des revendications 1 à 12, caractérisé par le fait qu'un filtre à poussières (3) à haut rendement de séparation est disposé dans la gaine des fumées (2, 5, 18) en amont du lit fluidisé (16).

14. Dispositif selon la revendication 13, caractérisé par le fait qu'il possède une gaine des fumées (2, 5, 18) et une gaine d'air comburant (19, 20) qui divisent la section de l'échangeur de chaleur régénératif (8) et du lit fluidisé (16) avec grille de fond (15) en deux segments de cercle (13, 14).

15. Procédé de dépoussiérage, par voie sèche, des fumées souillées d'éléments polluants gazeux, en particulier de combinaisons soufrées, fumées provenant de la combustion de combustibles fossiles, au sein d'un lit fluidisé contenant des produits absorbants, caractérisé par le fait que les fumées à dépoussiérer sont, avant leur entrée dans le lit fluidisé, refroidies à une température comprise entre 140° et 350°C, et les fumées qui quittent les lits fluidisés et qui contiennent des produits absorbants à grains fins sont dépoussiérées ensuite au moyen d'un filtre monté en aval.

16. Procédé selon la revendication 15 pour la mise en œuvre du dispositif selon l'une des revendications 1 à 14, caractérisé par le fait que la plage de température définie par les températures d'entrée et de sortie des fumées au niveau du lit fluidisé (16) est réglée de telle façon qu'elle inclut le point de rosée de 120°C de l'acide sulfurique (acide sulfureux).

FIG.1

FIG.2

FIG.3

FIG.4

FIG.5

FIG.6

13   12   14   10

FIG.7

34   33   12   10   13   14

FIG.8

FIG.9